# EUROPEAN PATENT APPLICATION

(11) **EP 3 917 274 A1**
(43) Date of publication of application: **01.12.2021**
(21) Application number: 19913751.4
(22) Date of filing: 01.02.2019
(51) Int. Cl.: H04W 76/18, H04W 76/19

(54) **METHOD AND APPARATUS FOR RADIO COMMUNICATION**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); YOU, Xin, Dongguan, Guangdong 523860 (CN)
(74) Representative: Manitz Finsterwald Patent- und Rechtsanwaltspartnerschaft mbB
(86) International application number: PCT/CN2019/074493
(87) International publication number: WO 2020/155120

(57) **Abstract**

Provided are a method and apparatus for radio communication. The method comprises: upon experiencing a radio link failure (RLF), a terminal apparatus initiating a handover process, a re-establishment process or a reporting process. In an embodiment of the present invention, a terminal apparatus, upon experiencing an RLF, can initiate a handover process, a re-establishment process or a reporting process, thereby effectively ensuring normal data transmission.

## Description

### TECHNICAL FIELD

The embodiments of the present disclosure relate to the field of communications, and more particularly, to a method and device for radio communication.

### BACKGROUND

A New Radio (NR) system supports cell handover. When a user who is using a network service moves from one cell to another cell, or due to load adjustment of the radio communication service, maintenance of activation operation, equipment failure, and the like, the system transfers a communication link of the user from the original cell to a new cell, that is, performs a handover process, for ensuring continuity of communication and quality of service. There may be problems that the handover is frequent and handover is easy to fail in a high-speed moving scenario and a high-frequency deployment scenario.

In the related art, in order to avoid a terminal device being to later or being unable to transmit a measurement report or receive a handover command when the terminal device moves into a poor coverage region due to high-speed movement, a pre-configured handover process triggered based on a condition is introduced. The basic principle of the handover process is that the terminal device performs handover (i.e., triggering a random access procedure and sending a handover complete message) to a target cell based on a pre-configured handover command when evaluating according to a condition configured by a network side that a condition related to the target cell is triggered.

However, in the handover process triggered based on a condition, the UE cannot initiate access until the target cell meets a condition. Therefore, during waiting for the condition to be satisfied, link quality of the source cell may be degraded and the Radio Link Failure (RLF) occurs, which results in that the data cannot be normally transmitted.

### SUMMARY

A method and device for radio communication are provided, which are capable of ensuring normal transmission of data.

According to a first aspect, a method for radio communication is provided. The method includes an operation as follows.

In response to that a Radio Link Failure (RLF) occurs, a terminal device initiates a handover process, a re-establishment process, or a reporting process.

According to a second aspect, a terminal device is provided for performing the method of the first aspect described above or various implementations thereof. Specifically, the terminal device includes a functional module for performing the method of the first aspect described above or each implementation thereof.

According to a third aspect, a terminal device is provided including a processor and a memory. The memory is configured to store a computer program, and the processor is configured to invoke and run the computer program stored in the memory to perform the method of the first aspect described above or various implementations thereof.

According to a fourth aspect, a chip is provided for implementing the method of the first aspect described above or various implementations thereof. Specifically, the chip includes a processor configured to invoke and run a computer program from a memory, to enable a device installed with the chip to perform the method in the first aspect described above or various implementations thereof.

According to a fifth aspect, a computer-readable storage medium is provided for storing a computer program, which enables a computer to perform the method of the first aspect described above or various implementations thereof.

According to a sixth aspect, a computer program product is provided, which includes computer program instructions enabling a computer to perform the method of the first aspect described above or various implementations thereof.

According to a seventh aspect, a computer program is provided, which, when run on a computer, enables the computer to perform the method of the first aspect described above or various implementations thereof.

Based on the above technical solutions, in response to that a RLF occurs, the terminal device can initiate the handover process, the re-establishment process or the reporting process, thereby effectively ensuring normal data transmission.

### BRIEF DESCRIPTION OF THE DRAWINGS

FIG. 1 is a schematic diagram of architecture of a communication system according to an embodiment of the present disclosure.
FIG. 2 is a schematic diagram of cell handover according to an embodiment of the present disclosure.
FIG. 3 is a schematic diagram of a handover process triggered based on a condition according to an embodiment of the present disclosure.
FIG. 4 is a schematic flowchart of a method of radio communication according to an embodiment of the present disclosure.
FIG. 5 is a schematic flowchart of contention-based random access according to an embodiment of the present disclosure.
FIG. 6 is a schematic flowchart of non-contention-based random access according to an embodiment of the present disclosure.
FIG. 7 to FIG. 13 are examples of a method for radio communication according to an embodiment of the present disclosure.
FIG. 14 is a schematic block diagram of a terminal device according to an embodiment of the present disclosure.
FIG. 15 is a schematic block diagram of another terminal device according to an embodiment of the present disclosure.
FIG. 16 is a schematic flowchart of a chip according to an embodiment of the present disclosure.

### DETAILED DESCRIPTION

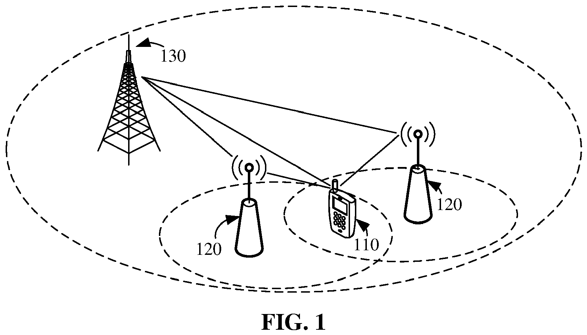

FIG. 1 is a schematic diagram of a system 100 according to an embodiment of the present disclosure.

As shown in FIG. 1, the terminal device 110 is connected to a first network device 130 in a first communication system and a second network device 120 in a second communication system. For example, the first network device 130 is a network device in a Long Term Evolution (LTE), and the second network device 120 is a network device in the new radio (NR).

Herein, the first network device 130 and the second network device 120 may include a plurality of cells.

It should be understood that FIG. 1 is an example of a communication system of an embodiment of the present disclosure, and the embodiments of the present disclosure are not limited to that shown in FIG. 1.

As an example, the communication system to which the embodiments of the present disclosure are applied may include at least a plurality of network devices in the first communication system and/or a plurality of network devices in the second communication system.

For example, the system 100 shown in FIG. 1 may include a primary network device in the first communication system and at least one secondary network device in the second communication system. At least one secondary network device is connected to the primary network device to constitute a plurality of connections, and is connected to the terminal device 110 to provide services for the terminal device. Specifically, the terminal device 110 may simultaneously establish connections through the primary network device and the secondary network device.

Optionally, the connection established between the terminal device 110 and the primary network device is a primary connection, and the connection established between the terminal device 110 and the secondary network device is a secondary connection. The control signaling of the terminal device 110 may be transmitted through the primary connection. The data of the terminal device 110 may be simultaneously transmitted through the primary connection and the secondary connection, or may be transmitted through the secondary connection only.

As yet another example, the first communication system and the second communication system in the embodiments of the present disclosure are different, but the types of the first communication system and the second communication system are not limited.

For example, the first communication system and the second communication system may be various communication systems, such as a Global System of Mobile communication (GSM) system, a Code Division Multiple Access (CDMA) system, a Wideband Code Division Multiple Access (WCDMA) system, a General Packet Radio Service (GPRS), an LTE system, an LTE Time Division Duplex (TDD), a Universal Mobile Telecommunication System (UMTS), and the like.

The primary network device and the secondary network device may be any access network device.

Optionally, in some embodiments, the access network device may be a Base Transceiver Station (BTS) in a GSM system or CDMA system, or may be a NodeB (NB) in a Wideband Code Division Multiple Access (WCDMA) system, or an Evolutional Node B (eNB or eNodeB) in an LTE system.

Optionally, the access network device may also be a base station (gNB) in a Next Generation Radio Access Network (NG RAN) or an NR system, or a radio controller in a Cloud Radio Access Network (CRAN). Optionally, the access network device may be a relay station, an access point, an in-vehicle device, a wearable device, or a network device in a Public Land Mobile Network (PLMN), or the like.

In the system 100 shown in FIG. 1, the following case is taken as an example, the first network device 130 is used as a primary network device and the second network device 120 is used as a secondary network device.

The first network device 130 may be an LTE network device, and the second network device 120 may be an NR network device. Alternatively, the first network device 130 may be an NR network device, and the second network device 120 may be an LTE network device. Alternatively, both the first network device 130 and the second network device 120 may be NR network devices. Alternatively, the first network device 130 may be a GSM network device, a CDMA network device, or the like, and the second network device 120 may also be a GSM network device, a CDMA network device, or the like. Alternatively, the first network device 130 may be a Macrocell, and the second network device 120 may be a Microcell, a Picocell, a Femtocell, or the like.

Optionally, the terminal device 110 may be any terminal device. The terminal device 110 includes but is not limited to be connected: via a wired line, such as via a Public Switched Telephone Networks (PSTN), a Digital Subscriber Line (DSL), a digital cable, a direct cable connection; and/or another data connection/network; and/or via a wireless interface, for example, for a cellular network, a Wireless Local Area Network (WLAN), a digital television network such as a DVB-H network, a satellite network, a AM-FM broadcast transmitter; and/or means of another terminal device arranged to receive/transmit communication signals; and/or an Internet of Things (IoT) device. The terminal device configured to communicate through a wireless interface may be referred to as a "radio communication terminal", a "radio terminal" or a "mobile terminal". Examples of the mobile terminal include, but are not limited to: a satellite or cellular telephone; a Personal Communications System (PCS) terminal that may combine a cellular radio telephone with data processing, facsimile, and data communication capabilities; a Personal Digital Assistant (PDA) that may include a radio telephone, a pager, Internet/Intranet access, a Web browser, a notebook, a calendar, and/or a Global Positioning System (GPS) receiver; and conventional laptop and/or palmtop receivers or other electronic devices including radio telephone transceivers. The terminal device may refer to an access terminal, User Equipment (UE), a user unit, a user station, a mobile station, a mobile radio station, a remote station, a remote terminal, a mobile device, a user terminal, a terminal, a radio communication device, a user agent, or a user apparatus. The access terminal may be a cellular telephone, a cordless telephone, a Session Initiation Protocol (SIP) telephone, a Wireless Local Loop (WLL) station, a PDA, a handheld device having a radio communication function, a computing device or other processing device connected to a radio modem, an in-vehicle device, a wearable device, a terminal device in a 5G network, a terminal device in the future evolved PLMN, or the like.

It should be understood that the terms "system" and "network" are used interchangeably herein.

In the embodiment of the present disclosure, the network device provides services for a cell, and the terminal device communicates with the network device through transmission resources (for example, frequency domain resources, or frequency spectrum resources) used by the cell. The cell may be a cell corresponding to the network device (for example, a base station), and the cell may belong to a macrocell or a base station corresponding to a small cell. The small cell herein may include a Metro cell, a Micro cell, a Pico cell, a Femto cell, and the like. These Small cells have characteristics of small coverage and low transmit power, and are suitable for providing a high-rate data transmission service.

It should be understood that the method of the embodiments of the present disclosure may be used to transmit various types of services.

For example, enhanced mobile broadband (eMBB), which targets the acquisition of multimedia content, services, and data by users, has grown rapidly in demand. For another example, since the eMBB may be deployed in different scenarios, such as indoor, urban, rural, etc., the eMBBs may be greately different in capabilities and requirements thereof. Therefore, detailed analysis can be performed in conjunction with specific deployment scenarios. For another example, typical applications of ultra reliable and low latency communication (URLLC) include industrial automation, power automation, telemedicine operations (surgery), traffic safety guarantee, etc. Typical features of massive machine type communication (mMTC) include high connection density, small data volume, delay-insensitive services, low cost and long service life of modules, and the like.

It should be understood that similar to the LTE system, the NR system supports the handover process. When a user who is using a network service moves from one cell to another cell, or due to load adjustment of radio transmission services, maintenance of activation operation, equipment failure, and the like, the system transfers a communication link of the user from the original cell to a new cell in order to ensure continuity of communication and quality of service, that is, performing a handover process.

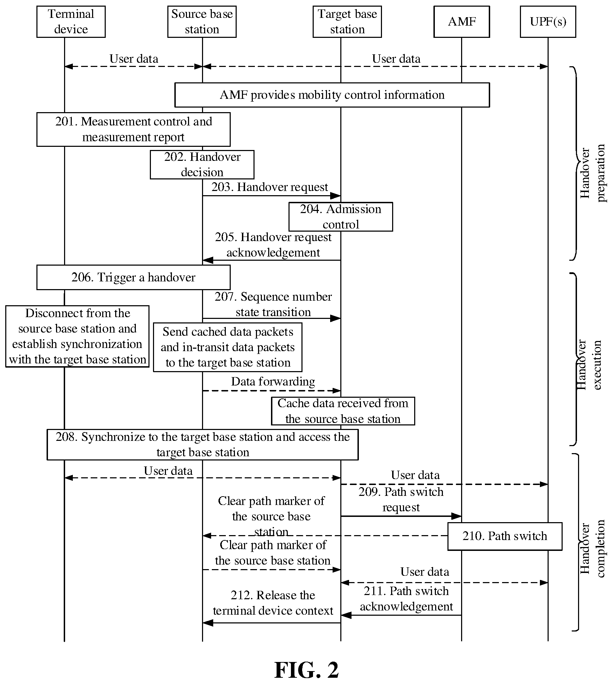

The handover process may be, for example, as shown in FIG. 2. The whole handover process is divided into the following three phases including a handover preparation phase, a handover execution phase and a handover completion phase.

The handover preparation phase includes measurement control and reporting, a handover request, and confirmation.

In the handover execution phase, the UE performs: a handover process upon receiving a handover command, that is, the UE disconnects from the source cell and connects to the target cell (for example, performing random access, and sending an RRC handover complete message to the target base station); SN state transition; and data forwarding.

In the handover completion phase, the target cell performs Path Switch with an access and mobility management function (AMF) and a user plane function (UPF) to release source base station UE context.

Specifically, as shown in FIG. 2, the handover preparation phase (201 to 205) may include following operations 201 to 205.

At 201, the source base station triggers the terminal device to perform measurement on a neighboring cell, so that the terminal device can perform measurement on a neighboring cell and report a measurement result to the source base station.

At 202, the source base station evaluates the measurement result reported by the terminal device and determines whether to trigger the handover.

At 203, if the source base station determines to trigger the handover, the sound base station sends a handover request to the target base station.

At 204, upon receiving the handover request sent by the source base station, the target base station may enable admission according to service information carried by the source base station, and perform radio resource configuration.

At 205, the target base station sends a handover request acknowledgement message to the source base station, and returns an admission result and radio resource configuration information in the target base station to the source base station. Thus, the handover preparation phase is completed.

In a second phase, the handover execution phase may include operations 206 to 208.

At 206, the source base station may trigger the terminal device to perform the handover upon receiving the handover request acknowledgement message from the target base station.

At 207, the source base station may forward buffered data, in-transit data packet, a system sequence number of the data and the like to the target base station. Also, the target base station may cache data received from the source base station.

In addition, the terminal device may disconnect from the source base station and establish synchronization with the target base station.

At 208, the terminal device synchronizes to the target base station. Thus, the handover execution phase is completed.

In a third phase, the handover completion phase may include operations 209 to 212.

At 209, the target base station sends a path switch request to an access and mobility management function (AMF).

At 210, upon receiving the path switch request from the target base station, the AMF performs path switch with a user plane function (UPF) to clear a path marker of a user plane of the source base station.

At 211, after the path switch is completed, the AMF may send a path switch acknowledgement message to the target base station.

At 212, the target base station sends a terminal device context release message to the source base station, notifies the source base station that the handover is successful, and triggers the source base station to release the terminal device context. Thus, the handover is completed.

The terminal device starts the timer T304 upon receiving the handover command, starts downlink synchronization to the target cell, obtains MIB information of the target cell, and then initiates random access. During a random access procedure, retransmissions for a plurality of preambles are allowed until the random access is successful. Further, if the timer T304 expires, it indicates that the handover fails, the terminal device may directly trigger an RRC connection re-establishment process.

It should be understood that in the embodiments of the present disclosure, in view of problems that the handover is frequent and handover is easy to fail in a high-speed moving scenario and a high-frequency deployment scenario, the 3rd Generation Partnership Project (3GPP) may consider introducing a handover process which is triggered based on a condition into the LTE and NR system. The basic principle of the handover process is that the terminal device performs handover (i.e., triggering a random access procedure and sending a handover complete message) to a target cell based on a pre-configured handover command when evaluating according to a condition configured by a network side that a condition related to the target cell is triggered, in order to avoid a terminal device being to later or being unable to transmit a measurement report or receive a handover command when the terminal device moves into a poor coverage region due to high-speed movement.

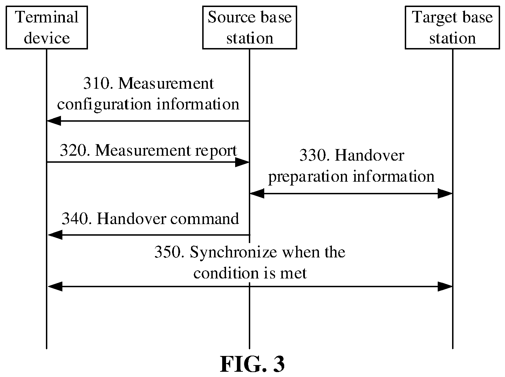

Specifically, the handover process triggered based on a condition may be as shown in FIG. 3. The handover process triggered based on a condition includes operations 310 to 350.

At 310, the source base station sends measurement configuration information to the terminal device.

At 320, the terminal device sends a measurement report to the source base station.

At 330, the source base station and the target base station exchange handover preparation information.

At 340, the source base station sends a handover command to the terminal device.

The handover command includes condition information for a cell or a beam.

At 350, when a condition is met, the terminal device synchronizes with the target base station (the terminal device accesses the target base station).

It should be noted that the embodiments of the present disclosure can be applied to the handover process triggered based on a condition. A method for radio communication according to the embodiments of the present disclosure is described below in conjunction with specific embodiments.

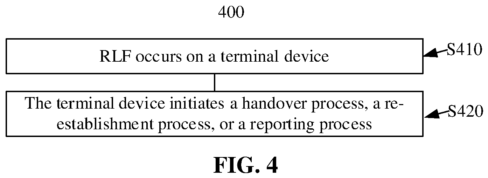

FIG. 4 is a schematic flowchart of a method 400 for radio communication according to an embodiment of the present disclosure. The method 400 may be executed by a terminal device. The terminal device shown in FIG. 4 may be the terminal device shown in FIG. 1.

As shown in FIG. 4, the method 400 includes a part or all of the following operations S410 and S420

At S410, an radio link failure (RLF) occurs in a terminal device.

At S420, the terminal device initiates a handover process, a re-establishment process, or a reporting process.

Illustratively, in some embodiments of the present disclosure, the operation that the RLF occurs in the terminal device may include the following situations: RLF occurs on a link between the terminal device and a source Master Node (MN), RLF occurs on a link between the terminal device and a source Secondary Node (SN), or RLF occurs on a link between the terminal device and a target MN.

For example, when channel quality between a terminal device and a primary cell of a source SN for serving the terminal device deteriorates, or the number of retransmissions of an RLC entity belonging to the source SN reaches a maximum retransmission number, or a random access failure occurs on an MAC entity of the source SN, the terminal device may determine that the RLF occurs on the link between the terminal device and the source SN, and then the terminal device initiates the handover process, the re-establishment process or the reporting process.

For example, when the channel quality between the terminal device and a primary cell of a source MN for serving the terminal device deteriorates, or the number of retransmissions of an RLC entity belonging to the source MN reaches the maximum retransmission number, or a random access failure occurs on a MAC entity of the source MN, the terminal device may determine that the RLF occurs on the link between the terminal device and the source MN, and then the terminal device initiates the handover process, the re-establishment process, or the reporting process.

Optionally, in some embodiments of the present disclosure, the terminal device may initiate the handover process when the RLF occurs.

For example, the terminal device directly initiates the handover process to a network node serving the target cell.

For another example, before the terminal device initiates the handover process, the terminal device determines a cell which can be camped on by cell search. In response to that the cell which can be camped on is a target cell, the terminal device initiates the handover process to the network node which servers the target cell. Optionally, the terminal device preferentially performs cell search on the source cell and the target cell.

Illustratively, in response to that the target cell meets a first condition, the terminal device initiates the handover process to a network node serving the target cell. For example, the first condition may include a condition that Reference Signal Received Power (RSRP) of the target cell is greater than or equal to a first threshold value, the terminal device initiates the handover process. For another example, the first condition may include a condition that Reference Signal Reception Quality (RSRQ) of the target cell is greater than or equal to a first threshold value, the terminal device initiates the handover process.

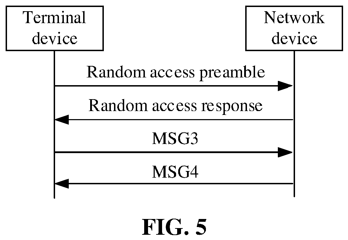

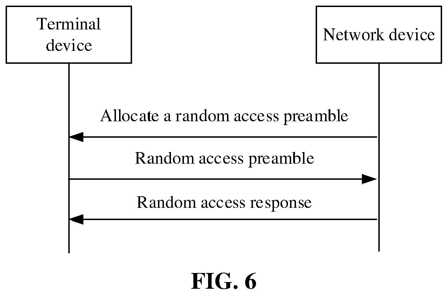

The handover process in the embodiments of the present disclosure may include triggering the random access procedure and sending a handover complete message. The random access procedure may include a contention random access procedure and a non-contention random access procedure. For ease of understanding, the contention random access procedure and the non-contention random access procedure of the embodiments of the present disclosure will be described in detail below with reference to FIG. 5 and FIG. 6, respectively.

FIG. 5 is a schematic flowchart of contention random access according to an embodiment of the present disclosure.

It should be understood that after the cell search process, the terminal device has achieved downlink synchronization with the cell, and thus the terminal device can receive downlink data. However, the terminal device cannot perform uplink transmission until achieving uplink synchronization with the cell. The terminal device establishes a connection and achieves uplink synchronization with the cell through the random access procedure.

The main purpose of random access is to achieve uplink synchronization and to assign a unique Cell Radio Network Temporary Identifier (C-RNTI) to the terminal device.

As shown in FIG. 5, in the embodiments of the present disclosure, the contention random access procedure includes operations as follows.

The terminal device sends a message 1 (MSG1) to the network device. MSG1 may carry a random access preamble. Upon receiving MSG1 sent by the terminal device, the network device may send a response message, that is, message 2 (MSG2), in response to the MSG1. The network device may calculate a Random Access Radio Network Temporary Identifier (RA-RNTI) based on a resource location of the MSG1, and scramble MSG2 by using the RA-RNTI. Upon receiving MSG2, the terminal device may send a message 3 (MSG3) to the network device according to the MSG2. MSG3 may optionally carry identification information or the like of the terminal device. Upon receiving MSG3 sent by the terminal, the network device may send a message 4 (MSG 4) to the terminal according to the MSG3.

MSG1 is an L1 message, MSG2 is an L2 (MAC layer) message, and MSG3 is an L3 (RRC layer) or L2 (MAC layer) message. MSG1 and MSG2 do not use a hybrid automatic repeat request (HARQ), while MSG3 and MSG4 are transmitted using the HARQ. When a random access attempt fails, the UE may initiate a next random access attempt.

The terminal device sends a preamble to the network device to inform the network device that there is a random access request, so that the network device can estimate transmission delay between the network device and the terminal device and calibrate the uplink timing accordingly. Optionally, the terminal device selects a preamble index and a Physical Random Access Channel (PRACH) resource for sending the preamble, and further transmits the preamble on the PRACH. Optionally, the network device may inform, through broadcasting system information (System Information Block (SIB), such as SIB2), all the terminal devices of which resources are allowed to transmit the preamble .

The network device sends a Random Access Response (RAR) to the terminal device. Specifically, after sending the preamble, the terminal device may monitor a Physical Downlink Control Channel (PDCCH) corresponding to an RA-RNTI in an RAR time window according to an RA-RNTI value, to receive the RAR corresponding to the RA-RNTI. If the RAR returned by the network device is not received within the RAR time window, it may be considered that the random access procedure failed.

The terminal device sends the message 3 (MSG3) to the network device, and the terminal device may carry a unique identifier (for example, C-RNTI; for another example, a terminal device identifier (serving-temporary mobile subscriber identity (S-TMSI) or a random number) from a core network) in MSG3.

The network device sends a contention resolution message (contention resolution) to the terminal device. Specifically, in the contention resolution mechanism, the network device carries a unique identifier of a winning terminal device in contention resolution (MSG4). Other terminal devices that do not win in contention resolution will re-initiate random access.

FIG. 6 is a schematic flowchart of non-contention random access according to an embodiment of the present disclosure.

After the cell search process, the terminal device has achieved downlink synchronization with the cell, and thus the terminal device can receive downlink data. However, the terminal device cannot perform uplink transmission until uplink synchronization with the cell is achieved. The terminal device may establish a connection and achieve uplink synchronization with the cell through the random access procedure.

Access collision will not occur in the non-contention random access procedure which performs random access using a dedicated preamble in order to accelerate an average speed of service recovery and shorten a service recovery time.

As shown in FIG. 6, the non-contention random access procedure may include operations as follows.

The terminal device receives random access preamble allocation (i.e., MSG0) sent by the network device, the terminal device sends a random access preamble (i.e., MSG1) to the network device according to the random access preamble allocation sent by the network device. The terminal device receives a random access response (i.e., MSG2) sent by the network device after sending the random access preamble. MSG0 and MSG1 are L1 messages, and MSG2 is L2 (MAC layer) message. In the non-contention random access procedure, resources of the non-contention random access are obtained through RRC signaling or a PDCCH order.

Optionally, in some embodiments of the present disclosure, in response to that an RLF occurs, the terminal device may initiate a re-establishment process. Specifically, the terminal device sends a re-establishment request to the network device, the network device sends a re-establishment message to the terminal device, and the terminal device sends a re-establishment complete message to the network device.

For example, in response to that the RLF occurs, the terminal device may directly initiate a re-establishment process.

For another example, in some embodiments of the present disclosure, before the terminal device initiates a re-establishment process, the terminal device determines a cell which can be camped on through cell search. In response to that the cell which can be camped on and the target cell are different cells, the terminal device initiates a re-establishment process to a network node serving the cell which can be camped on.

For another example, after failing to access the target cell, the terminal device initiates a re-establishment process to the network node serving the cell which can be camped on. Optionally, the terminal device performs cell search before sending the re-establishment request to the network node serving the cell which can be camped on.

Illustratively, the terminal device initiates the re-establishment process in response to that the target cell meets a second condition. For example, the terminal devices initiates the re-establishment process in response to that at least one of the following conditions is met: the terminal device is not configured with a source SN; the terminal device is not configured with a bifurcated signaling raido bearer (SRB); the terminal device does not access a target MN; or the terminal device does not access a target SN.

It should be understood that the re-establishment process in the embodiment of the present disclosure may also include a random access procedure, and the terminal may obtain a time advance (TA) through the random access. To avoid repetition, details are not described herein.

Optionally, in some embodiments of the present disclosure, the terminal device may initiate a reporting process in response to that the RLF occurs.

For example, the terminal device may initiate the reporting process through the source SN. Specifically, the terminal device initiates the reporting process through the SN in response to that at least one of the following conditions is met: the terminal device is configured with the source SN; the RLF does not occur on the source SN; or the source SN is configured with a bifurcated SRB. The bifurcated SRB here includes SRB1 and SRB2.

For another example, the terminal device may initiate a reporting process through the source MN. Specifically, in response to that the RLF does not occur on the link between the terminal device and the source MN, the reporting process is initiated through the source MN.

For another example, the terminal device may initiate a reporting process through the target MN. Specifically, in response to that the terminal device accesses the target MN successfully, the terminal device initiates a reporting process through the target MN. Further, the terminal device initiates the reporting process through the target MN in response to that at least one of the following conditions is met: the terminal device accesses the target MN successfully; the target MN is an SN of the source MN; or the target MN is configured with a bifurcated SRB. The bifurcated SRB here includes SRB 1 and SRB2.

For another example, the terminal device may initiate a reporting process through the target SN. Specifically, the terminal device initiates the reporting process through the target SN in response to that at least one of the following conditions is met: the terminal device accesses the target SN successfully; the terminal device fails to access a target MN; the terminal device maintains a connection with the source MN; or the source MN is configured as the target SN of the terminal device.

Optionally, in response to that the source MN of the terminal device is configured as the target SN, the terminal device may initiate the reporting process through at least one of an SRB of the source MN, or an SRB of the target SN. In response to that the source SN of the terminal device is configured as the target MN, the terminal device may initiate the reporting process through at least one of an SRB of the source SN, or an SRB of the target MN.

Optionally, in some embodiments of the present disclosure, the terminal device receives a handover command sent by a source MN. The handover command includes a handover condition and an identification of a target cell. The handover command may include an identification of at least one target cell and a handover condition for each cell. In the embodiments of the present disclosure, that is, the terminal device may initiate the handover process triggered based on a condition. Specifically, in response to that the target cell does not meet the handover condition, the terminal device initiates the handover process, the re-establishment process, or the reporting process.

Optionally, in some embodiments of the present disclosure, the terminal device may suspend data transmission in response to that the RLF occurs.

For example, the terminal device suspends data transmission of the terminal device.

For another example, the terminal device suspends data transmission on a bearer corresponding to a node where the RLF occurs on the terminal device.

For another example, the terminal device suspends data transmission on a node where the RLF occurs on the terminal device.

Further, data transmission is resumed in response to that the terminal device meets at least one of the following conditions: random access of the terminal device is successful; the terminal device sends first indication information; or the terminal device receives second indication information. Optionally, the first indication information is used to indicate that the terminal device completes the handover process, and the second indication information is used to instruct the terminal device to resume data transmission. For example, the first indication information indicates that the terminal device completes the handover process through a Radio Resource Control (RRC) reconfiguration complete message. The second indication information instructs the terminal device to resume data transmission of a source node through an RRC re-establishment complete message.

Optionally, in some embodiments of the present disclosure, the terminal device receives third indication information. The third indication information is used to indicate that the terminal device initiates the handover process, the re-establishment process or the reporting process in response to that RLF occurs on the terminal device. Further, the third indication information is used to indicate that the terminal device initiates the handover process, the re-establishment process, or the reporting process in response to that RLF occurs on a link between the terminal device and a source MN, the terminal device and a source SN, or the terminal device and a target MN.

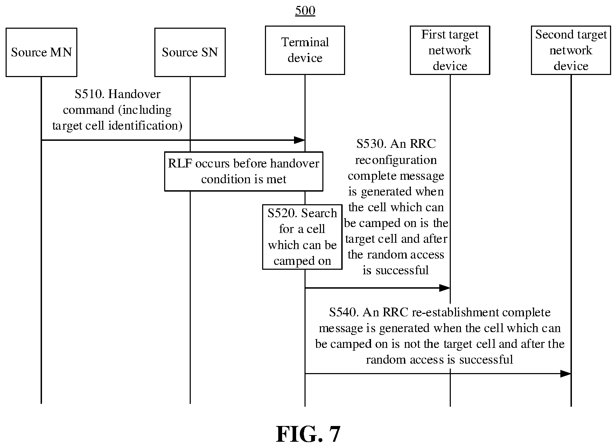

FIG. 7 to FIG. 13 are specific embodiments of a method for radio communication according to the embodiments of the present disclosure.

The method for radio communication according to the embodiments of the present disclosure are described in detail below with reference to FIG. 7 to FIG. 13.

### First Embodiment

In response to that RLF occurs on a link between the terminal device and the source SN, the terminal device initiates a handover process or an re-establishment process.

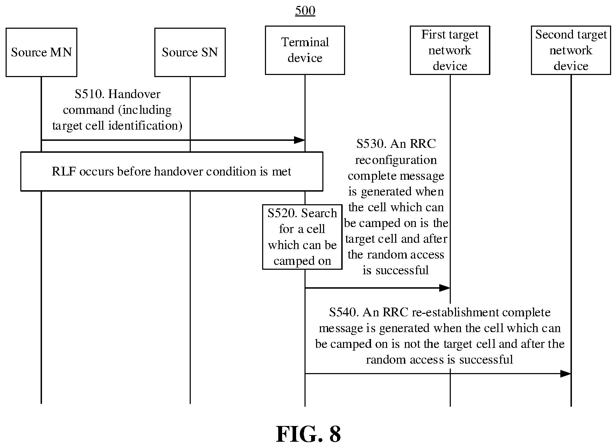

FIG. 7 is a schematic flowchart of initiating a handover process or a re-establishment process by the terminal device in response to that RLF occurs on a link between the terminal device and the source SN according to an embodiment of the present disclosure. FIG. 8 is a schematic flowchart of initiating a handover process or a re-establishment process by the terminal device in response to that RLF occurs on a link between the terminal device and the source MN according to an embodiment of the present disclosure.

As shown in FIG. 7 and FIG. 8, the method 500 may include operations S510 to S530.

At S510, a handover command (including target cell identification) is transmitted.

That is, only if a target cell meets a condition, for example, channel quality of the target cell reaches a certain level, the UE can initiate a handover process.

At S520, search for a cell which can be camped on is performed.

The terminal device determines that channel quality of the source cell deteriorates and RLF occurs, and at this time, channel quality of the target cell does not meet a condition required for handover. Optionally, the terminal device suspends bearing, and data transmission of the node. The terminal device obtains a cell which can be camped on by cell search; the terminal device initiates the handover process or the re-establishment process to a network node that serves the cell which can be camped on. The terminal device may preferentially search for the source cell and the target cell to obtain the cell which can be camped on.

At S530, an RRC reconfiguration complete message is generated when the cell which can be camped on is the target cell and the random access is successful.

When the cell which can be camped on is the target cell, the terminal device initiates a random access procedure to a network node serving the target cell. For example, when the target cell meets a random access condition, the terminal device initiates a random access procedure to the network node. For another example, the terminal device directly initiates a random access procedure to the network node.

The terminal device sends first indication information to the network node after random access is successful. The first indication information is used to indicate that the terminal device has completed the handover process and instruct the terminal device to resume data transmission of the source node. The first indication information indicates that the terminal device has completed the handover process through an RRC reconfiguration complete message.

The terminal device initiates the random access procedure to the network node until a termination condition is met. For example, the terminal device initiates the random access procedure to the network node until a specific timer expires. The specific timer is T304. For another example, the terminal device initiates the random access procedure to the network node until the number of random access failures is greater than or equal to a third threshold. The third threshold may be a preconfigured threshold or a threshold indicated by the network device.

At S540, an RRC re-establishment complete message is generated when the cell which can be camped on is not the target cell and the random access is successful.

In this operation, the cell which can be camped on and the target cell are different cells, and the terminal device initiates the re-establishment process to a network node serving the cell which can be camped on. The terminal device receives second indication information sent by the network node after the random access is successful. The second indication information is used to instruct the terminal device to resume data transmission of the source node. The terminal device resumes data transmission of the source node according to the second indication information. The second indication information instructs the terminal device to resume data transmission of the source node through the RRC re-establishment complete message.

Upon receiving the second indication information, the terminal device can resume the bearing and data transmission of the node after successful access.

After the re-establishment process fails, the terminal device enters an idle state.

In the embodiments of the present disclosure, when RLF occurs at a source node, the terminal device may attempt to access the target node in advance. After the terminal device performs cell search, if the searched cell is in a target cell list, a normal handover is performed. If the searched cell is not in the target cell list, a re-establishment process is performed. Therefore, the re-establishment process may be regarded as an advanced pre-configured handover process, which reduces interruption delay and ensures that a re-establishment process for a non-target cell can be performed normally.

### Second Embodiment

In response to that RLF occurs on a link between the terminal device and the source SN, the terminal device initiates a handover process or a re-establishment process.

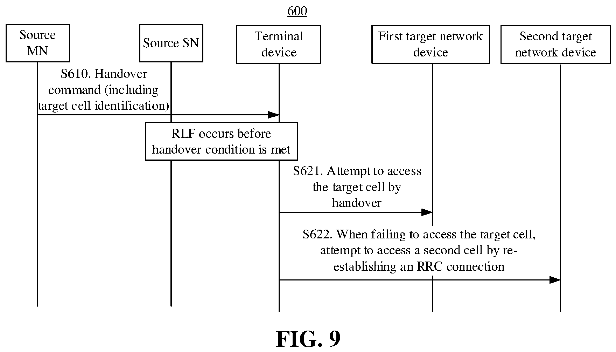

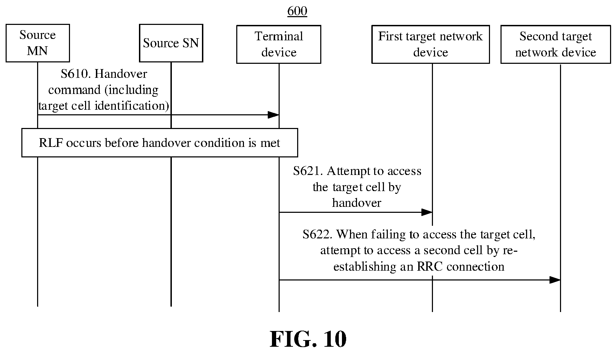

FIG. 9 is a schematic flowchart of initiating a handover process or a re-establishment process by the terminal device in response to that RLF occurs on the link between the terminal device and the source SN according to an embodiment of the present disclosure. FIG. 10 is a schematic flowchart of initiating a handover process or a re-establishment process by the terminal device in response to that RLF occurs on a link between the terminal device and the source MN according to an embodiment of the present disclosure.

As shown in FIG. 9 and FIG. 10, the method 600 may include operations S610 to S622.

At S610, a handover command (including target cell identification) is transmitted.

That is, only if a target cell meets a condition, for example, channel quality of the target cell reaches a certain level, the terminal device initiates a handover process.

At S621, a handover command (including target cell identification) is transmitted.

The terminal device determines that channel quality of the source cell deteriorates and RLF occurs, and at this time, channel quality of the target cell does not meet a condition required for handover. Optionally, the terminal device suspends bearing, and data transmission of the node. The terminal device may directly attempt access and perform random access to the target cell.

The terminal device sends first indication information to the network node serving the target cell after random access is successful. The first indication information is used to indicate that the terminal device has completed the handover process and instruct the terminal device to resume data transmission of the source node. The first indication information indicates that the terminal device has completed the handover process through an RRC reconfiguration complete message.

The terminal device initiates the random access procedure to the network node until a termination condition is met. For example, the terminal device initiates the random access procedure to the network node until a specific timer expires. The specific timer is T304. For another example, the terminal device initiates the random access procedure to the network node until the number of random access failures is greater than or equal to a third threshold. The third threshold may be a preconfigured threshold or a threshold indicated by the network device.

After sending the first indication information, the terminal device can resume the bearing and data transmission of the node after successful access.

At S622, when failing to access the target cell, the terminal device attempts to access a second cell by re-establishing an RRC connection.

The terminal device obtains a cell which can be camped on by cell search, and initiates the re-establishment process to a network node serving the cell which can be camped on. The terminal device receives second indication information sent by the network node after the random access is successful, the second indication information is used to instruct the terminal device to resume data transmission of the source node. The terminal device resumes data transmission of the source node according to the second indication information. The second indication information instructs the terminal device to resume data transmission of the source node through the RRC re-establishment complete message.

After the re-establishment process fails, the terminal device enters an idle state.

In the embodiment of the present disclosure, when RLF occurs a source node, the terminal device may attempt to access the target node in advance. The terminal device attempts a normal handover first, and performs re-establishment after a failure, that is, performing operations such as cell search and re-establishment. Therefore, the re-establishment process may be regarded as an advanced pre-configured handover process, which reduces interruption delay and ensures that a re-establishment process for a non-target cell can be performed normally.

### Third Embodiment

In response to that RLF occurs on a link between the terminal device and the source MN, the terminal device initiates a reporting process.

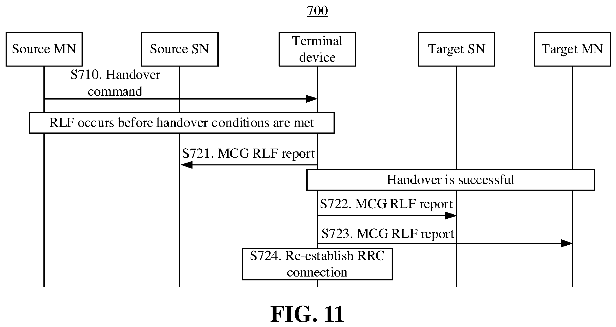

FIG. 11 is a schematic flowchart of initiating a reporting process by the terminal device in response to that RLF occurs on a link between the terminal device and the source MN according to an embodiment of the present disclosure. As shown in FIG. 11, the method 700 may include operations S710 to S724.

At S710, a handover command is transmitted.

At S721, the terminal device sends a Master Cell Group (MCG) RLF report to the source SN.

The terminal device determines that channel quality of the source cell deteriorates and RLF occurs, and at this time, channel quality of the target cell does not meet a condition required for handover. Optionally, the terminal device suspends bearing, and data transmission of the node. The terminal device reports related information of the RLF of the source node through a source SN. The related information includes related measurement information. The related measurement information may include at least one of frequency information, or channel quality information of the network node. For example, in response to that the terminal device is configured with the source SN, the RLF does not occur on the source SN, and the source SN is configured with a bifurcated SRB, the terminal device reports the related information of the RLF of the source node through the source SN.

At S722, the terminal device sends a MCG RLF report to the target SN.

The terminal device determines that channel quality of the source cell deteriorates and RLF occurs, and at this time, channel quality of the target cell does not meet a condition required for handover. Optionally, the terminal device suspends bearing, and data transmission of the node. The terminal device reports related information of the RLF of the source node through a target SN. The related information includes related measurement information. The related measurement information may include at least one of frequency information, or channel quality information of the network node. For example, in response to that the terminal device accesses the target SN successfully, the terminal device reports the related information of the RLF of the source node through the target SN.

At S723, the terminal device sends an MCG RLF report to the target MN.

The terminal device determines that channel quality of the source cell deteriorates and RLF occurs, and at this time, channel quality of the target cell does not meet a condition required for handover. Optionally, the terminal device suspends bearing, and data transmission of the node. The terminal device reports related information of the RLF of the source node through a target MN. The related information includes related measurement information. The related measurement information may include at least one of frequency information, or channel quality information of the network node. For example, in response to that the terminal device accesses the target MN successfully, the terminal device reports the related information of the RLF of the source node through the target MN. Further, in response to that the target MN is an SN of the source MN, and the target MN is configured with a bifurcated SRB, the terminal device reports the related information of the RLF of the source node through the target MN.

At S724, the terminal device initiates a re-establishment process.

The terminal device determines that the channel quality of the source cell deteriorates and the RLF occurs, and at this time, the channel quality of the target cell does not meet a condition required for handover. Optionally, the terminal device suspends bearing, and data transmission of the node. The terminal device initiates the re-establishment process, and the terminal device enters an idle state after the re-establishment process fails.

After the terminal re-establishes or accesses successfully, or receives an indication for instructing to resume data transmission from the network device, the terminal device can resume the bearing and the data transmission of the node.

In the embodiment of the present disclosure, in response to that the RLF occurs on the source node, and when connection quality of the MN or the SN in the source node or the target node is normal at this time, the UE may report a problem of the SN (MN) through the MN (SN), or report a failure cause of the target node (source node) through the source node (target node), and then rely on the network for link recovery, and no longer perform the related operations of the pre-configuration handover. Therefore, it is possible to optimize the re-establishment process as an error reporting process, and rely on the network to determine subsequent operations, for example, further handover is performed to reduce uncertainty of a result caused by continuing to perform the pre-configuration handover.

### Fourth Embodiment

In response to that RLF occurs on a link between the terminal device and the source SN, the terminal device initiates a reporting process.

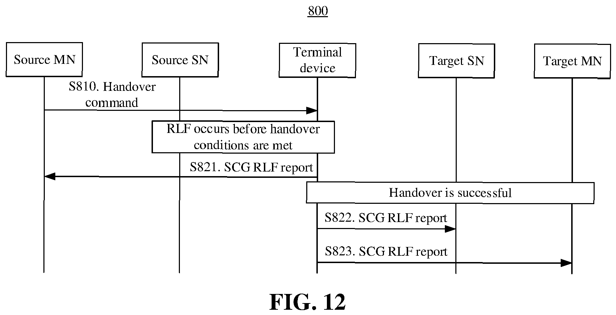

FIG. 12 is a schematic flowchart of initiating a reporting process by the terminal device in response to that RLF occurs on the link between the terminal device and the source SN according to an embodiment of the present disclosure.

At S810, a handover command is transmitted.

At S821, the terminal device sends a Secondary Cell Group (SCG) RLF report to the source MN.

The terminal device determines that channel quality of the source cell deteriorates and RLF occurs, and at this time, channel quality of the target cell does not meet a condition required for handover. Optionally, the terminal device suspends bearing, and data transmission of the node. In response to that RLF does not occur on the source MN, the terminal device reports related information of the RLF of the source node through the source MN. The related information includes related measurement information. The related measurement information may include at least one of: frequency information, or channel quality information of the network node.

At S822, the terminal device sends a SCG RLF report to the target SN.

The terminal device determines that channel quality of the source cell deteriorates and RLF occurs, and at this time, channel quality of the target cell does not meet a condition required for handover. Optionally, the terminal device suspends bearing, and data transmission of the node. In response to that the terminal device successfully accesses the target SN, the terminal device reports related information of the RLF of the source node through the source MN. The related information includes related measurement information. The related measurement information may include at least one of: frequency information, or channel quality information of the network node.

At S823, the terminal device sends an SCG RLF report to the target MN.

The terminal device determines that channel quality of the source cell deteriorates and RLF occurs, and at this time, channel quality of the target cell does not meet a condition required for handover. Optionally, the terminal device suspends bearing, and data transmission of the node. In response to that the terminal device successfully accesses the target MN, the terminal device reports related information of the RLF of the source node through the source MN. The related information includes related measurement information. The related measurement information may include at least one of: frequency information, or channel quality information of the network node.

After the terminal re-establishes or accesses successfully, or receives an indication for instructing to resume data transmission from the network device, the terminal device can resume the bearing and the data transmission of the node.

In the embodiment of the present disclosure, in response to that the RLF occurs on the source node, and when connection quality of the MN or the SN in the source node or the target node is normal at this time, the UE may report a problem of the SN (MN) through the MN (SN), or report a failure cause of the target node (source node) through the source node (target node), and then rely on the network for link recovery, and no longer perform the related operations of the pre-configuration handover. Therefore, it is possible to optimize the re-establishment process as an error reporting process, and rely on the network to determine subsequent operations, for example, further handover is performed to reduce uncertainty of a result caused by continuing to perform the pre-configuration handover.

### Fifth Embodiment

In response to that RLF occurs on a link between the terminal device and the target MN, the terminal device initiates a reporting process.

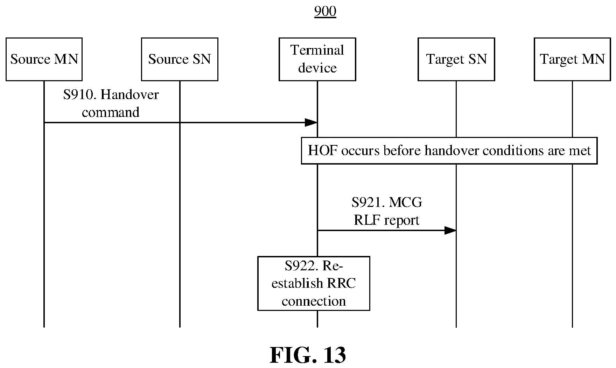

FIG. 13 is a schematic flowchart of initiating the reporting process by the terminal device in response to that the RLF occurs on the link between the terminal device and the target MN according to an embodiment of the present disclosure.

As shown in FIG. 13, the method 900 may include operations S910 to S922.

At S910, a handover command is received.

At S921, the terminal device sends an MCG RLF report to the target SN.

The terminal device determines that channel quality of the source cell deteriorates and RLF occurs, and at this time, channel quality of the target cell does not meet a condition required for handover. Optionally, the terminal device suspends bearing, and data transmission of the node.

For example, in response to that the terminal device is configured with the target SN, RLF does not occur on the source SN, and the source SN is configured with a bifurcated SRB, the terminal device reports related information of RLF of the source node through the source SN. The related information includes related measurement information. The related measurement information may include at least one of: frequency information, or channel quality information of the network node.

For another example, in response to that the source MN of the terminal device is used as the target SN, and the RLF does not occur on the source MN and the source MN is configured with the bifurcated SRB, or a Hand Over Failure (HOF) is sent, the terminal device reports the related information of the RLF of the source node through the target SN.

At S922, the terminal device initiates the re-establishment process.

The terminal device determines that channel quality of the source cell deteriorates and RLF occurs, and at this time, channel quality of the target cell does not meet a condition required for handover. Optionally, the terminal device suspends bearing, and data transmission of the node. In response to that the terminal device is not configured with the target SN, the RLF occurs on the source SN, or the source SN is not configured with the bifurcated SRB, the terminal device initiates the re-establishment process.

After the terminal re-establishes or accesses successfully, or receives an indication for instructing to resume data transmission from the network device, the terminal device can resume the bearing and the data transmission of the node.

In the embodiment of the present disclosure, in response to that HOF occurs on the target node, the terminal device may report a problem of the SN (MN) through the MN (SN), or report a failure cause of the target node (source node) through the source node (target node), and then rely on the network for link recovery, and no longer perform the related operations of the pre-configuration handover. Therefore, it is possible to optimize the re-establishment process as an error reporting process, and rely on the network to determine subsequent operations, for example, further handover is performed to reduce uncertainty of a result caused by continuing to perform the pre-configuration handover.

The preferred embodiments of the present disclosure have been described in detail above in connection with the drawings. However, the present disclosure is not limited to the specific details of the above embodiments. Within the scope of the technical concept of the present disclosure, various simple variations can be made to the technical solution of the present disclosure, and these simple variations are within the scope of protection of the present disclosure.

For example, each of the specific technical features described in the foregoing detailed embodiments may be combined in any suitable manner without conflict. In order to avoid unnecessary repetition, various possible combinations will not be described herein anymore.

For another example, the various embodiments of the present disclosure can also be combined arbitrarily, as long as they do not depart from the ideas of the present disclosure, they should also be considered as the disclosure of the present disclosure.

It should be understood that, in the various method embodiments of the disclosure, a value of a serial number of the above-mentioned operations does not mean an execution order, and the execution order of the operations should be determined by a function and internal logic thereof, and should not constitute any limitation to the implementation process of the embodiments of the disclosure.

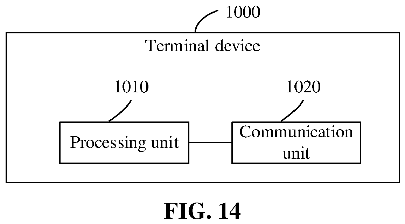

The method embodiments of the present disclosure are described in detail above in connection with FIG. 1 to FIG. 13, and the device embodiments of the present disclosure are described in detail below in connection with FIG. 14 to FIG. 16.

FIG. 14 is a schematic block diagram of a communication device 1000 according to an embodiment of the present disclosure.

Specifically, as shown in FIG. 14, the communication device 1000 may include a processing unit 1010 and a communicating unit 1020.

The processing unit 1010 is configured to determine that RLF occurs on a terminal device.

The communication unit 1020 is configured to initiate a handover process, a re-establishment process, or a reporting process.

Optionally, in some embodiments of the present disclosure, the processing unit 1010 is configured to determine that RLF occurs on a link between the terminal device and a source MN.

Optionally, in some embodiments of the present disclosure, the processing unit 1010 is configured to determine that RLF occurs on a link between the terminal device and a source SN.

Optionally, in some embodiments of the present disclosure, the processing unit 1010 is configured to determine that RLF occurs on a link between the terminal device and a target MN.

Optionally, in some embodiments of the present disclosure, the communicating unit 1020 is configured to initiate a handover process.

Optionally, in some embodiments of the present disclosure, the communicating unit 1020 is further configured to initiate a handover process to a network node serving a target cell.

Optionally, in some embodiments of the present disclosure, the communicating unit 1020 is further configured to: before initiating a handover process, determine a cell which can be camped on by cell search; and in response to that the cell which can be camped on is a target cell, initiate the handover process to a network node serving the target cell.

Optionally, in some embodiments of the present disclosure, the communicating unit 1020 is further configured to perform cell search on the source cell and the target cell preferentially.

Optionally, in some embodiments of the present disclosure, the communicating unit 1020 is further configured to: in response to that a target cell meets a first condition, initiate a handover process to a network node serving the target cell.

Optionally, in some embodiments of the present disclosure, the first condition includes: a condition that RSRP of the target cell is greater than or equal to a first threshold value, under which, the handover process is initiated.

Optionally, in some embodiments of the present disclosure, the first condition includes: a condition that Reference Signal Reception Quality (RSRQ) of the target cell is greater than or equal to a first threshold value, under which, the handover process is initiated.

Optionally, in some embodiments of the present disclosure, the communicating unit 1020 is configured to initiate a re-establishment process.

Optionally, in some embodiments of the present disclosure, the communicating unit 1020 is further configured to: before initiating re-establishment process, determine a cell which can be camped on by cell search; and in response to that the cell which can be camped on and the target cell are different cells, initiate the re-establishment process to a network node serving the cell which can be camped on.

Optionally, in some embodiments of the present disclosure, the communicating unit 1020 is further configured to: after failing to access the target cell, initiate the re-establishment process to a network node serving the cell which can be camped on.

Optionally, in some embodiments of the present disclosure, the communicating unit 1020 is further configured to: initiate the re-establishment process in response to at least one of the following conditions is met: the terminal device is not configured with a source SN; the terminal device is not configured with a bifurcated SRB; the terminal device does not access a target MN; or the terminal device does not access a target SN.

Optionally, in some embodiments of the present disclosure, the communicating unit 1020 is configured to initiate the reporting process.

Optionally, in some embodiments of the present disclosure, the communicating unit 1020 is further configured to initiate the reporting process through the source SN.

Optionally, in some embodiments of the present disclosure, the communicating unit 1020 is further configured to initiate the reporting process through the SN in response to at least one of the following conditions is met: the terminal device is configured with the source SN; the RLF does not occur on the source SN; or the source SN is configured with a bifurcated SRB.

Optionally, in some embodiments of the present disclosure, the communicating unit 1020 is further configured to initiate the reporting process through the source MN.

Optionally, in some embodiments of the present disclosure, the communicating unit 1020 is further configured to initiate the reporting process through the source MN in response to at least one of the following conditions is met: the RLF does not occur on the link between the terminal device and the source MN; or the source MN is configured as a target SN.

Optionally, in some embodiments of the present disclosure, the communicating unit 1020 is further configured to initiate the reporting process through a target MN.

Optionally, in some embodiments of the present disclosure, the communicating unit 1020 is further configured to initiate the reporting process through the target MN in response to at least one of the following conditions is met: the terminal device accesses the target MN successfully; the source SN is configured as the target MN; the target MN is an SN of the source MN; or the target MN is configured with a bifurcated SRB.

Optionally, in some embodiments of the present disclosure, the communicating unit 1020 is further configured to initiate the reporting process through a target SN.

Optionally, in some embodiments of the present disclosure, the communicating unit 1020 is further configured to initiate the reporting process through the target SN in response to at least one of the following conditions is met: the terminal device accesses the target SN successfully; the terminal devices fails to access a target MN; the terminal device maintains a connection with the source MN; or the source MN is configured as the target SN of the terminal device.

Optionally, in some embodiments of the present disclosure, the source MN of the terminal device is configured as a target SN, the communicating unit 1020 is further configured to initiate the reporting process through at least one of an SRB of the source MN, or an SRB of the target SN.

Optionally, in some embodiments of the present disclosure, the source SN of the terminal device is configured as a target MN, the communicating unit 1020 is further configured to initiate the reporting process through at least one of an SRB of the source SN, or an SRB of the target MN.

Optionally, in some embodiments of the present disclosure, the communicating unit 1020 is further configured to receive a handover command sent by a source MN. The handover command includes a handover condition and an identification of a target cell.

Optionally, in some embodiments of the present disclosure, the communicating unit 1020 is further configured to: in response to that the target cell does not meet the handover condition, initiate the handover process, the re-establishment process, or the reporting process.

Optionally, in some embodiments of the present disclosure, the handover command includes an identification of at least one target cell and a handover condition of each of the at least one target cell.

Optionally, in some embodiments of the present disclosure, the communicating unit 1020 is further configured to suspend data transmission of the terminal device.

Optionally, in some embodiments of the present disclosure, the communicating unit 1020 is further configured to suspend data transmission on a bearer corresponding to a node where the RLF occurs on the terminal device.

Optionally, in some embodiments of the present disclosure, the communicating unit 1020 is further configured to suspend data transmission on a node where the RLF occurs on the terminal device.

Optionally, in some embodiments of the present disclosure, the communicating unit 1020 is further configured to resume data transmission in response to at least one of the following conditions is met: random access of the terminal device is successful; the terminal device sends first indication information; or the terminal device receives second indication information. The first indication information is used to indicate that the terminal device completes the handover process, and the second indication information is used to instruct the terminal device to resume data transmission.

Optionally, in some embodiments of the present disclosure, the first indication information indicates that the terminal device completes the handover process through a Radio Resource Control (RRC) reconfiguration complete message.

Optionally, in some embodiments of the present disclosure, the second indication information instructs the terminal device to resume data transmission of a source node through an RRC re-establishment complete message.

Optionally, in some embodiments of the present disclosure, the communicating unit 1020 is further configured to receive third indication information. The third indication information is used to instruct to initiate the handover process, the re-establishment process, or the reporting process in response to that the RLF occurs on the terminal device.

Optionally, in some embodiments of the present disclosure, the third indication information is used to instruct to initiate the handover process, the re-establishment process, or the reporting process in response to that RLF occurs on a link between the terminal device and a source MN, the terminal device and a source SN, or the terminal device and a target MN.

It should be understood that the device embodiment and the method embodiment may correspond to each other, and for similar description, reference may be made to the method embodiment. Specifically, the terminal device 1000 shown in FIG. 12 may correspond to corresponding subject in performing the methods of the embodiments of the present disclosure, and the foregoing and other operations and/or functions of the respective units in the terminal device 1000 are used to implement the corresponding procedures in respective method. For brevity, it will not be repeated here.

The communication device according to the embodiments of the present disclosure is described above from the perspective of functional modules in connection with FIG. 14. It should be understood that the functional modules may be implemented in the form of hardware, or in the form of software instructions, or in a combination of hardware and software modules.

Specifically, the operations of the method embodiments of the present disclosure may be performed by an integrated logic circuit of hardware in the processor and/or instructions in the form of software. The operations of the method disclosed in the embodiments of the present disclosure may be directly performed by a hardware decoding processor, or may be performed by a combination of hardware and software modules in the decoding processor.

Optionally, the software modules may be located in mature storage medium in the art such as a random access memory, a flash memory, a read-only memory, a programmable read-only memory, an electrically erasable programmable memory, a register. The storage medium is located in a memory, and the processor reads the information in the memory and performs the operations in the above-described method embodiments in combination with hardware thereof.

For example, in the embodiments of the present disclosure, the processing unit may be implemented by a processor and the communicating unit may be implemented by a transceiver.

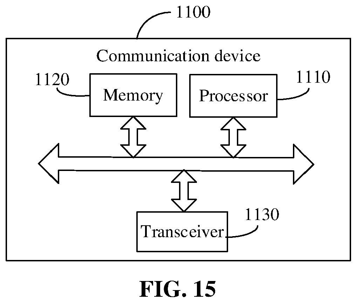

FIG. 15 is a schematic block diagram of a communication device 1100 according to an embodiment of the present disclosure. The communication device 1100 shown in FIG. 15 includes a processor 1110 that can invoke and run a computer program from a memory to implement the method in the embodiment of the present disclosure.

Optionally, as shown in FIG. 15, the communication device 1100 may also include a memory 1120. The memory 1120 may be used to store indication information, and may also be used to store code, instructions, and the like executed by the processor 1110. Herein, the processor 1110 may invoke and runa computer program from the memory 1120 to implement the method in the embodiments of the present disclosure.

Herein, the memory 1120 may be a separate device independent of the processor 1110, or may be integrated in the processor 1110.

Optionally, as shown in FIG. 15, the communication device 1100 may further include a transceiver 1130 that may be controlled by the processor 1110 to communicate with other devices. The processor may control the transceiver to send information or data to another device, or receive information or data sent by another device.

The transceiver 1130 may include a transmitter and a receiver. The transceiver 1130 may further include antennas, and the number of antennas may be one or more.

Optionally, the communication device 1100 may be a terminal device according to the embodiment of the present disclosure, and the communication device 1100 may implement a corresponding flow implemented by the terminal device in each method of the embodiments of the present disclosure. That is, the communication device 1100 of the embodiments of the present disclosure may correspond to the terminal device 1000 in the embodiments of the present disclosure, and may correspond to an entity for performing the method 400 according to the embodiments of the present disclosure. For brevity, it will not be repeated here.

It should be understood that the various components of the communication device 1100 are connected by a bus system. In addition to a data bus, the bus system also includes a power bus, a control bus, and a status signal bus.

In addition, the embodiments of the present disclosure further provide a chip, which may be an integrated circuit chip and has a signal processing capability, and can implement or perform the methods, operations, and logic block diagrams disclosed in the embodiments of the present disclosure.

Optionally, the chip can be applied to various communication devices, so that the communication device installed with the chip can perform the methods, operations, and logic block diagrams disclosed in the embodiments of the present disclosure.

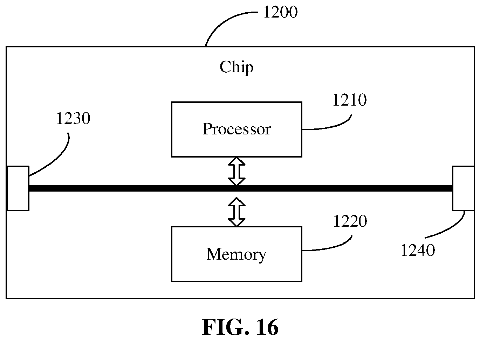

FIG. 16 is a schematic block diagram of a chip according to an embodiment of the present disclosure.

The chip 1200 shown in FIG. 16 includes a processor 1210 that can invoke and run a computer program stored from a memory to implement the methods in the embodiments of the present disclosure.

Optionally, as shown in FIG. 16, the chip 1200 may further include a memory 1220. Herein, the processor 1210 may invoke and run a computer program stored from the memory 1220 to implement the method in the embodiments of the present disclosure. The memory 1220 may be used to store indication information, and may also be used to store code, instructions, and the like executed by the processor 1210.

Herein, the memory 1220 may be a separate device independent of the processor 1210, or may be integrated in the processor 1210.

Optionally, the chip 1200 may further include an input interface 1230. Herein, the processor 1210 may control the input interface 1230 to communicate with another device or chip, for example, may obtain information or data transmitted by another device or chip.

Optionally, the chip 1200 may further include an output interface 1240. Herein, the processor 1210 may control the output interface 1240 to communicate with another device or chip, for example, may output information or data to another device or chip.

Optionally, the chip may be applied to the network device in the embodiments of the present disclosure, and the chip may implement corresponding flows implemented by the network device in the various methods in the embodiments of the present disclosure. For brevity, it will not be repeated here.

Optionally, the chip may be applied to the terminal device in the embodiments of the present disclosure, and the chip may implement corresponding flows realized by the terminal device in each method in the embodiments of the present disclosure. For brevity, it will not be repeated here.

It should be understood that the chip mentioned in the embodiments of the present disclosure may also be referred to as a system-level chip, a system chip, a chip system or a system-on-chip chip. It should also be understood that the various components of the chip 1200 are connected by a bus system. In addition to a data bus, the bus system also includes a power bus, a control bus, and a status signal bus.

The processor may include, but is not limited to a General purpose processor, a Digital Signal Processor (DSP), an Application Specific Integrated Circuit (ASIC), a Field Programmable Gate Array (FPGA) or other programmable logic devices, a discrete gate or a transistor logic device, a discrete hardware component, and the like.

The processor may be configured to implement or perform the methods, operations, and logic block diagrams disclosed in the embodiments of the present disclosure. The operations of the method disclosed in connection with the embodiments of the present disclosure may be directly performed by a hardware decoding processor, or performed by a combination of hardware and software modules in the decoding processor. The software module may be located in a storage medium mature in the art, such as a random access memory, a flash memory, a read-only memory, a programmable read-only memory, or an erasable programmable memory, a register, or the like. The storage medium is located in a memory, and the processor reads information in the memory and performs the operations of the above method in conjunction with hardware thereof.

The memory includes, but is not limited to a volatile memory and/or a non-volatile memory. Herein, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which functions as an external cache. By way of exemplary but not restrictive description, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a synch Link DRAM (SLDRAM), and a Direct Rambus RAM (DR RAM).

It should be noted that the memories of the systems and methods described herein are intended to include, but are not limited to, these and any other suitable types of memories.

A computer-readable storage medium for storing a computer program is also provided in the embodiments of the present disclosure. The computer-readable storage medium stores one or more programs including instructions that, when executed by a portable electronic device including a plurality of application programs, enable the portable electronic device to perform the method for radio communication according to the embodiments of the present disclosure.

Optionally, the computer-readable storage medium may be applied to the network device in the embodiments of the present disclosure, and the computer program causes the computer to execute the corresponding flows implemented by the network device in the respective methods in the embodiments of the present disclosure. For brevity, it will not be repeated here.

Optionally, the computer-readable storage medium may be applied to the mobile terminal/terminal device in the embodiments of the present disclosure, and the computer program causes the computer to execute the corresponding flows implemented by the mobile terminal/terminal device in the respective methods in the embodiments of the present disclosure. For brevity, it will not be repeated here.

The present disclosure further provides a computer program product including a computer program.

Optionally, the computer program product may be applied to the network device in the embodiments of the present disclosure, and the computer program causes the computer to execute the corresponding flows implemented by the network device in the respective methods in the embodiments of the present disclosure. For brevity, details are not described herein.

Optionally, the computer program product may be applied to the mobile terminal/terminal device in the embodiments of the present disclosure, and the computer program causes the computer to execute the corresponding flows implemented by the mobile terminal/terminal device in the respective methods in the embodiments of the present disclosure. For brevity, it will not be repeated here.

The embodiments of the disclosure further provide a computer program. The computer program, when executed by a computer, enables the computer to execute the methods of the embodiments shown in the methods 300 to 500.

Optionally, the computer program may be applied to the network device in the embodiments of the present disclosure. When the computer program is run on a computer, the computer is enabled to execute the corresponding flows implemented by the network device in the respective methods in the embodiments of the present disclosure. For brevity, it will not be repeated here.

The embodiments of the present disclosure further provide a communication system that may include a terminal device 810 and a network device 820 as shown in FIG. 8. Herein the terminal device 810 may be used to implement the corresponding functions implemented by the terminal device in the above method for radio communication, and the network device 820 may be used to implement the corresponding functions implemented by the network device in the above method for radio communication. For brevity, it will not be repeated here.

It should be noted that the term "system" herein may also be referred to as "network management architecture" or "network system".

It should also be understood that the terms used in the embodiments of the present disclosure and the appended claims are only for the purpose of describing specific embodiments, and are not intended to limit the embodiments of the present disclosure.

For example, the singular forms "a", "the", "the above-descried" and "said" as used in the embodiments of the present disclosure and the appended claims are also intended to include the plural forms, unless the context clearly indicates otherwise.

Those skilled in the art will appreciate that the units and algorithm operations of the examples described in connection with the embodiments disclosed herein can be implemented in electronic hardware, or a combination of computer software and electronic hardware. Whether the functions are performed in hardware or software depends on particular applications and design constraints of the solution. Those skilled in the art may use different methods to implement the described functions for each particular application, but such implementation should not be considered to go beyond the scope of embodiments of the present disclosure.

If the above functions are implemented in the form of a software function module and sold or used as an independent product, the functions may also be stored in a computer-readable storage medium. Based on such understanding, the essential part of the technical solutions of the embodiments of the present disclosure or a part of the technical solutions that contributes to related technologies or a part of the technical solutions can be implemented in the form of a software product. The computer software product is stored in a storage medium and includes several instructions to enable the computer device (which may be a personal computer, a server or a network device, etc.) to execute all or a part of the methods described in the various embodiments of the present disclosure. The forgoing storage media includes various mediums that can store program codes, such as a USB disk, a mobile hard disk, an ROM, an RAM, a magnetic disk, or an optical disk, and the like.

It will be apparent to those skilled in the art that for the convenience and brevity of the description, reference may be made to the corresponding processes in the foregoing method embodiments for the specific working processes of the above-described systems, devices and units, and details will not be described herein.

In the several embodiments provided herein, it should be understood that the disclosed systems, devices, and methods may be implemented in other ways.

For example, the division of units, modules or components in the device embodiment described above is merely a logical functional division and may be implemented in another way. For example, a plurality of units, modules or components may be combined or integrated into another system, or some units, modules or components may be ignored or not be performed.

For another example, the units/modules/components described above as separate/display components may or may not be physically separate, that is, may be located in the same location, or may be distributed across multiple network elements. A part or all of the units/modules/components may be selected according to actual needs to achieve the purpose of the embodiments of the present disclosure.

Finally, it should be noted that the mutual coupling, direct coupling or communication connection shown or discussed above may be indirect coupling or communication connection through some interfaces, devices or units, and may be in electrical, mechanical or other form.

The foregoing is only the embodiments of the present disclosure, but the protection scope of the present disclosure is not limited thereto. Variation and substitution which can be readily thought by those skilled in the art within the technical scope disclosed in the present disclosure should fall within the protection scope of the present disclosure. Therefore, the protection scope of this disclosure should conform to the protection scope of the claims.

## Claims

1. A method for radio communication, comprising:
initiating, by a terminal device, a handover process, a re-establishment process or a reporting process in response to that a Radio Link Failure (RLF) occurs.

2. The method of claim 1, wherein the initiating, by the terminal device, the handover process, the re-establishment process or the reporting process in response to that the RLF occurs, comprises:
initiating the handover process, the re-establishment process or the reporting process in response to that RLF occurs on a link between the terminal device and a source Master Node (MN).

3. The method of claim 1, wherein the initiating, by the terminal device, the handover process, the re-establishment process or the reporting process in response to that the RLF occurs comprises:
initiating the handover process, the re-establishment process or the reporting process in response to that RLF occurs on a link between the terminal device and a source Secondary Node (SN).

4. The method of claim 1, wherein the initiating, by the terminal device, the handover process, the re-establishment process or the reporting process in response to that the RLF occurs comprises:
initiating the handover process, the re-establishment process or the reporting process in response to that RLF occurs on a link between the terminal device and a target master node (MN).

5. The method of any one of claims 1 to 4, wherein the initiating, by the terminal device, the handover process, the re-establishment process or the reporting process in response to that the RLF occurs comprises:
initiating, by the terminal device, the handover process.

6. The method of claim 5, wherein the initiating, by the terminal device, the handover process comprises:
initiating, by the terminal device, the handover process to a network node serving a target cell.

7. The method of claim 5, further comprising: before the initiating, by the terminal device, the handover process,
determining, by the terminal device, a cell which is able to be camped on by cell search;
wherein the initiating by the terminal device the handover process comprises:
initiating, by the terminal device, the handover process to a network node serving a target cell in response to that the cell which is able to be camped on is the target cell.

8. The method of claim 7, further comprising:
performing, by the terminal device, cell search on a source cell and the target cell preferentially.

9. The method of any one of claims 5 to 8, wherein the initiating, by the terminal device, the handover process comprises:
initiating, by the terminal device, the handover process to a network node serving a target cell in response to that the target cell meets a first condition.

10. The method of claim 9, wherein the first condition comprises:
in response to determining that Reference Signal Received Power (RSRP) of the target cell is greater than or equal to a first threshold value, initiating, by the terminal device, the handover process.

11. The method of claim 9, wherein the first condition comprises:
in response to determining that Reference Signal Reception Quality (RSRQ) of the target cell is greater than or equal to a first threshold value, initiating, by the terminal device, the handover process.

12. The method of any one of claims 1 to 4, wherein the initiating, by the terminal device, the handover process, the re-establishment process or the reporting process in response to that the RLF occurs comprises:
initiating, by the terminal device, the re-establishment process.

13. The method of claim 12, further comprising: before the initiating, by the terminal device, the re-establishment process,
determining, by the terminal device, a cell which is able to be camped on by cell search;
wherein the initiating, by the terminal device, the re-establishment process comprises:
initiating, by the terminal device, the re-establishment process to a network node serving the cell which is able to be camped on, in response to that the cell which is able to be camped on and the target cell are different cells.

14. The method of claim 12, wherein the initiating, by the terminal device, the re-establishment process comprises:
initiating, by the terminal device, the re-establishment process to a network node serving the cell which is able to be camped on after the terminal device fails to access a target cell.

15. The method of any one of claims 12 to 14, wherein the initiating, by the terminal device, the re-establishment process comprises:
initiating the re-establishment process in response to that the terminal device meets at least one of following conditions:
the terminal device is not configured with a source secondary node (SN);
the terminal device is not configured with a bifurcated signaling radio bearer (SRB);
the terminal device does not access a target master node (MN); or
the terminal device does not access a target secondary node (SN).

16. The method of any one of claims 1 to 4, wherein the initiating, by the terminal device, the handover process, the re-establishment process or the reporting process in response to that the RLF occurs comprises:
initiating, by the terminal device, the reporting process.

17. The method of claim 16, wherein the initiating, by the terminal device, the reporting process comprises:
initiating, by the terminal device, the reporting process through the source secondary node (SN).

18. The method of claim 17, wherein the initiating, by the terminal device, the reporting process through the source SN comprises:
initiating the reporting process through the SN in response to that the terminal device meets at least one of following conditions:
the terminal device is configured with the source SN;
RLF does not occur on the source SN; or
the source SN is configured with a bifurcated signaling radio bearer (SRB).

19. The method of claim 16, wherein the initiating, by the terminal device, the reporting process comprises:
initiating, by the terminal device, the reporting process through the source master node (MN).

20. The method of claim 19, wherein the initiating, by the terminal device, the reporting process through the source MN comprises:
initiating the reporting process through the source MN in response to that the terminal device meets at least one of following conditions:
RLF does not occur on a link between the terminal device and the source MN; or
the source MN is configured as a target SN.

21. The method of claim 16, wherein the initiating, by the terminal device, the reporting process comprises:
initiating, by the terminal device, the reporting process through a target master node (MN).

22. The method according to claim 21, wherein the initiating, by the terminal device, the reporting process through the target MN comprises:
initiating the reporting process through the target MN in response to that the terminal device meets at least one of following conditions:
the terminal device accesses the target MN successfully;
a source secondary node (SN) is configured as the target MN;
the target MN is an SN of a source master node (MN); or
the target MN is configured with a bifurcated signaling radio bearer (SRB).

23. The method of claim 16, wherein the initiating, by the terminal device, the reporting process comprises:
initiating, by the terminal device, the reporting process through a target secondary node (SN).

24. The method of claim 23, wherein the initiating, by the terminal device, the reporting process through the target SN comprises:
initiating the reporting process through the target SN in response to that the terminal device meets at least one of following conditions:
the terminal device accesses the target SN successfully;
the terminal device fails to access a target master node (MN);
the terminal device maintains a connection with a source MN; or
the source MN is configured as the target SN of the terminal device.

25. The method of any one of claims 16 to 24, wherein a source master node (MN) of the terminal device is configured as a target secondary node (SN);
wherein the initiating, by the terminal device, the reporting process comprises:
initiating, by the terminal device, the reporting process through at least one of a signaling radio bearer (SRB) of the source MN or an SRB of the target SN.

26. The method of any one of claims 16 to 24, wherein a source secondary node (SN) of the terminal device is configured as a target master node (MN);
wherein the initiating, by the terminal device, the reporting process comprises:
initiating, by the terminal device, the reporting process through at least one of a signaling radio bearer (SRB) of the source SN or an SRB of the target MN.

27. The method of any one of claims 1 to 26, further comprising:
receiving, by the terminal device, a handover command sent by a source master node (MN), wherein the handover command comprises a handover condition and an identification of a target cell.

28. The method of claim 27, wherein the initiating, by the terminal device, the handover process, the re-establishment process or the reporting process in response to that the RLF occurs comprises:
initiating, by the terminal device, the handover process, the re-establishment process or the reporting process in response to that the target cell does not meet the handover condition .

29. The method of claim 27, wherein the handover command comprises an identification of at least one target cell and a handover condition of each of the at least one target cell.

30. The method of any one of claims 1 to 29, further comprising:
suspending, by the terminal device, data transmission of the terminal device.

31. The method of any one of claims 1 to 29, further comprising:
suspending, by the terminal device, data transmission on a bearer corresponding to a node where the RLF occurs on the terminal device.

32. The method of any one of claims 1 to 29, further comprising:
suspending, by the terminal device, data transmission on a node where the RLF occurs on the terminal device.

33. The method of any one of claims 30 to 32, further comprising:
resuming the data transmission in response to that the terminal device meets at least one of following conditions:
random access of the terminal device is successful;
first indication information is sent by the terminal device; or
second indication information is received by the terminal device;
wherein the first indication information is used to indicate that the terminal device completes the handover process, and the second indication information is used to instruct the terminal device to resume data transmission.

34. The method of claim 33, wherein the first indication information indicates that the terminal device completes the handover process through a Radio Resource Control (RRC) reconfiguration complete message.

35. The method of claim 33, wherein the second indication information instructs the terminal device to resume data transmission of a source node by the terminal device through an RRC re-establishment complete message.

36. The method of any one of claims 1 to 35, further comprising:
receiving, by the terminal device, third indication information, wherein the third indication information is used to instruct the terminal device to initiate the handover process, the re-establishment process or the reporting process in response to that the RLF occurs.

37. The method of claim 36, wherein the third indication information is used to instruct to initiate the handover process, the re-establishment process or the reporting process in response to that RLF occurs on a link between the terminal device and a source master node (MN), or between the terminal device and a source secondary node (SN), or between the terminal device and a target MN.

38. A terminal device, comprising:
a processing unit, configured to determine that Radio Link Failure (RLF) occurs on the terminal device; and
a communication unit, configured to initiate a handover process, a re-establishment process or a reporting process.

39. The terminal device of claim 38, wherein the processing unit is configured to:
determine that RLF occurs on a link between the terminal device and a source Master Node (MN).

40. The terminal device of claim 38, wherein the processing unit is configured to:
determine that RLF occurs on a link between the terminal device and a source Secondary Node (SN).

41. The terminal device of claim 38, wherein the processing unit is configured to:
determine that RLF occurs on a link between the terminal device and a target master node (MN).

42. The terminal device of any one of claims 38 to 41, wherein the communication unit is configured to:
initiate the handover process.

43. The terminal device of claim 42, wherein the communication unit is further configured to:
initiate the handover process to a network node serving a target cell.

44. The terminal device of claim 42, wherein the communication unit is further configured to:
before the initiation of the handover process, determine a cell which is able to be camped on by cell search; and
initiate the handover process to a network node serving the target cell in response to that the cell which is able to be camped on is a target cell.

45. The terminal device of claim 44, wherein the communication unit is further configured to:
perform cell search on a source cell and the target cell preferentially.

46. The terminal device of any one of claims 42 to 45, wherein the communication unit is further configured to:
initiate the handover process to a network node serving a target cell in response to that the target cell meets a first condition.

47. The terminal device of claim 46, wherein the first condition comprises:
in response to that Reference Signal Received Power (RSRP) of the target cell is greater than or equal to a first threshold value, initiating the handover process.

48. The terminal device of claim 46, wherein the first condition comprises:
in response to that Reference Signal Reception Quality (RSRQ) of the target cell is greater than or equal to a first threshold value, initiating the handover process.

49. The terminal device of any one of claims 38 to 41, wherein the communication unit is configured to:
initiate the re-establishment process.

50. The terminal device of claim 49, wherein the communication unit is further configured to:
before the initiation of the re-establishment process, determine a cell which is able to be camped on by cell search through the terminal device; and
initiate the re-establishment process to a network node serving the cell which is able to be camped on in response to that the cell which is able to be camped on and the target cell are different cells.

51. The terminal device of claim 49, wherein the communication unit is further configured to:
initiate the re-establishment process to a network node serving the cell which is able to be camped on, after the terminal device fails to access a target cell.

52. The terminal device of any one of claims 49 to 51, wherein the communication unit is further configured to initiate the re-establishment process in response to at least one of following conditions is met:
the terminal device is not configured with a source secondary node (SN);
the terminal device is not configured with a bifurcated signaling radio bearer (SRB);
the terminal device does not access a target master node (MN); or
the terminal device does not access a target secondary node (SN).

53. The terminal device of any one of claims 38 to 41, wherein the communication unit is configured to:
initiate the reporting process.

54. The terminal device of claim 53, wherein the communication unit is further configured to:
initiate the reporting process through the source SN.

55. The terminal device of claim 54, wherein the communication unit is further configured to initiate the reporting process through the SN in response to at least one of following conditions is met:
the terminal device is configured with the source SN;
RLF does not occur on the source SN; or
the source SN is configured with a bifurcated signaling radio bearer (SRB).

56. The terminal device of claim 53, wherein the communication unit is further configured to:
initiate the reporting process through the source master node (MN).

57. The terminal device of claim 56, wherein the communication unit is further configured to:
initiate the reporting process through the source MN in response to at least one of following conditions is met:
RLF does not occur on a link between the terminal device and the source MN; or
the source MN is configured as a target SN.

58. The terminal device of claim 53, wherein the communication unit is further configured to:
initiate the reporting process through a target master node (MN).

59. The terminal device of claim 58, wherein the communication unit is further configured to:
initiate the reporting process through the target MN in response to at least one of following conditions is met:
the terminal device accesses the target MN successfully;
a source secondary node (SN) is configured as the target MN;
the target MN is an SN of a source master node (MN); or
the target MN is configured with a bifurcated signaling radio bearer (SRB).

60. The terminal device of claim 53, wherein the communication unit is further configured to:
initiate the reporting process through a target secondary node (SN).

61. The terminal device of claim 60, wherein the communication unit is further configured to:
initiate the reporting process through the target SN in response to at least one of following conditions is met:
the terminal device accesses the target SN successfully;
the terminal device fails to access a target master node (MN);
the terminal device maintains a connection with a source MN; or
the source MN is configured as the target SN of the terminal device.

62. The terminal device of any one of claims 53 to 61, wherein the source MN of the terminal device is configured as a target SN;
wherein the communication unit is configured to:
initiate the reporting process through at least one of a signaling radio bearer (SRB) of the source MN or an SRB of the target SN.

63. The terminal device of any one of claims 16 to 24, wherein a source secondary node (SN) of the terminal device is configured as a target master node (MN);
wherein the communication unit is configured to:
initiate the reporting process through at least one of a signaling radio bearer (SRB) of the source SN or an SRB of the target MN.

64. The terminal device of any one of claims 38 to 63, wherein the communication unit is further configured to:
receive a handover command sent by a source master node (MN), wherein the handover command comprises a handover condition and an identification of a target cell.

65. The terminal device of claim 64, wherein the communication unit is further configured to:
initiate the handover process, the re-establishment process or the reporting process in response to that the target cell does not meet the handover condition .

66. The terminal device of claim 64, wherein the handover command comprises an identification of at least one target cell and a handover condition of each of the at least one target cell.

67. The terminal device of any one of claims 38 to 66, wherein the communication unit is further configured to:
suspend data transmission of the terminal device.

68. The terminal device of any one of claims 38 to 66, wherein the communication unit is further configured to:
suspend data transmission on a bearer corresponding to a node where the RLF occurs on the terminal device .

69. The terminal device of any one of claims 38 to 66, wherein the communication unit is further configured to:
suspend data transmission on a node where the RLF occurs on the terminal device .

70. The terminal device of any one of claims 67 to 69, wherein the communication unit is further configured to:
resume the data transmission in response to at least one of following condition is met:
random access of the terminal device is successful;
first indication information is sent by the terminal device; or
second indication information is received by the terminal device;
wherein the first indication information is used to indicate that the terminal device completes the handover process, and the second indication information is used to instruct the terminal device to resume data transmission.

71. The terminal device of claim 70, wherein the first indication information indicates that the terminal device completes the handover process through a Radio Resource Control (RRC) reconfiguration complete message.

72. The terminal device of claim 70, wherein the second indication information instructs the terminal device to resume data transmission of a source node by the terminal device through an RRC re-establishment complete message.

73. The terminal device of any one of claims 38 to 72, wherein the communication unit is further configured to:
receive third indication information, wherein the third indication information is used to instruct the terminal device to initiate the handover process, the re-establishment process or the reporting process in response to that the RLF occurs..

74. The terminal device of claim 73, wherein the third indication information is used to instruct to initiate the handover process, the re-establishment process or the reporting process in response to that RLF occurs on a link between the terminal device and a source master node (MN), or between the terminal device and a source secondary node (SN), or between the terminal device and a target MN.

75. A terminal device, comprising:
a processor;
a memory; and
a transceiver,
wherein the memory is configured to store a computer program, and the processor is configured to invoke and execute the computer program stored in the memory to perform the method of any one of claims 1 to 37.

76. A chip, comprising:
a processor configured to involve and execute a computer program in a memory, to cause a device installed with the chip to perform the method of any one of claims 1 to 37.

77. A computer-readable storage medium for storing a computer program, which causes a computer to perform the method of any one of claims 1 to 37.

78. A computer program product comprising computer program instructions causing a computer to perform the method of any one of claims 1 to 37.

79. A computer program causing a computer to perform the method of any one of claims 1 to 37.
